# EUROPÄISCHE PATENTSCHRIFT

(11) **EP 1 476 290 B1**
(45) Veröffentlichungstag und Bekanntmachung des Hinweises auf die Patenterteilung: **16.05.2007**
(21) Anmeldenummer: 02795160.7
(22) Anmeldetag: 12.12.2002
(51) Int. Cl.: B29B 7/48, B29C 47/40, B29C 47/60

(54) **VORRICHTUNG ZUM DISPERGIEREN UND AUFSCHMELZEN FLIESSF HIGER STOFFE**
DEVICE FOR DISPERSING AND MELTING FLOWABLE MATERIALS
DISPOSITIF DE DISPERSION ET DE MISE EN FUSION DE MATERIAUX APTES A L'ECOULEMENT

(30) Priorität: 20.02.2002 DE 10207145
(43) Veröffentlichungstag der Anmeldung: 17.11.2004
(73) Patentinhaber: Blach, Josef A., 74348 Lauffen (DE)
(72) Erfinder: Blach, Josef A., 74348 Lauffen (DE)
(74) Vertreter: Berngruber, Otto
(86) Internationale Anmeldenummer: PCT/EP2002/014105
(87) Internationale Veröffentlichungsnummer: WO 2003/070442

(56) Entgegenhaltungen:
- EP-A- 0 330 308
- DE-A- 3 205 428
- US-B1- 6 312 756

## Beschreibung

Die Erfindung bezieht sich auf eine Vorrichtung zum Dispergieren und Aufschmelzen fließfähiger Stoffe.

Bei derartigen Vorrichtungen werden neben Schneckenelementen Knetblöcke und dergleichen Bearbeitungselemente auf die Tragwellen gesteckt, um ein Optimum der Antriebsenergie in Knet- und Mischleistung umzusetzen.

Um den Kunststoff bei der Verarbeitung möglichst gleichmäßig entlang der Schnecke zu verteilen ist, aus DE 31 34 479 A1 ein Schneckenextruder bekannt, bei dem eine dreigängige Schnecke in Scheiben aufgeteilt wird, die fortschreitend gegeneinander winkelversetzt auf die Tragwelle aufgesteckt werden. Die dadurch gebildeten Stirnflächen an den Scheiben müssen in halber Höhe mit zentrischen Absätzen versehen werden, damit sich die betreffenden Stirnseiten bei Schneckendrehung frei aneinander vorbei bewegen können.

Die dreigängige Schneckenmaschine ist aufgrund der geometrischen Zusammenhänge nur bis zu einem maximalen Verhältnis von Schneckenaußendurchmesser zu Schneckenkerndurchmesser von kleiner als 1,3661 ausführbar. Dabei ist sowohl die stirnseitig wirksame Schneckenfläche als auch die Fläche der Ineinanandergreifzone relativ klein, sodass die verfahrenstechnische Wirksamkeit praktisch unbedeutend wird.

Durch die zahlreichen Scheiben weist die bekannte Vorrichtung zudem einen erheblichen Fertigungsaufwand auf. Vor allem aber führen die vielen möglichen Winkelpositionen der Scheiben beim Aufstecken leicht zu Fehlern, insbesondere, wenn mehrere Schnecken gleich aufgesteckt werden müssen. Auch wird durch die Scheiben die Biegefestigkeit der Schneckenwelle zur Übertragung radialer Kräfte spürbar herabgesetzt, was den partiellen Verschleiß und die Bruchgefährdung erhöht.

Aus der nächstkommenden US-A-6,312,756 ist eine Vorrichtung zum Dispergieren und Aufschmelzen fließfähiger Stoffe mit zwei achsparallelen, gleichsinnig drehbaren Tragwellen bekannt, auf die Schneckenelemente gleicher Steigungsrichtung sowie Mischelemente verdrehsicher aufgesteckt sind, mit denen benachbarte Wellen kämmend ineinandergreifen. Dabei bestehen die Mischelemente aus elliptischen Scheiben, die unter Bildung von Stirnflächen mit gleichem Drehsinn fortschreitend zueinander winkelversetzt angeordnet sind.

Aufgabe der Erfindung ist es, eine Schneckenmaschine bereit zu stellen, die wie eine herkömmliche Schneckenmaschine mit Schneckenelemente bestückbar ist, jedoch unter optimaler Umsetzung ihrer Antriebsenergie zu einer optimalen Homogenisierung führt.

Dies wird erfindungsgemäß mit der im Anspruch 1 definierten Vorrichtung erreicht. In den Unteransprüchen sind vorteilhafte Ausgestaltungen der Erfindung wiedergegeben.

Nach der Erfindung werden auf die als Keilwellen ausgebildeten Tragwellen ein- oder zweigängige Schneckenelemente normaler Länge aufgesteckt. Die Länge des Verfahrensteils der Vorrichtung entspricht dabei mindestens dem Zehnfachen des Außendurchmessers der Schneckenelemente. Die Drehzahl der Wellen ist mindestens 100 Umdrehungen pro Minute.

Im Gegensatz zu einem normalen Schneckenextruder mit Schneckenelementen mit durchgehenden Schneckengängen ist jedoch zumindest ein Teil der Schneckenelemente der erfindungsgemäßen Vorrichtung durch ein- oder zweigängige Schneckenelemente gebildet, die aus Abschnitten bestehen, die mit gleichem Drehsinn fortschreitend gegeneinander verdreht sind. Dadurch wird an beiden Seiten jedes Abschnitts eine der Gangzahl entsprechende Anzahl von Stirnflächen gebildet, durch die der zu bearbeitende Stoff in seinem Fluss längs der Schubkante des Schneckenkamms gestört und aufgespalten wird, wodurch sich eine innige Durchmischung ergibt.

Beim Dispergieren von Feststoffen in einer viskosen Matrix ist es bisher nicht gelungen, die Teilchen und Agglomerate optimal zu zerteilen. Einer der Gründe dafür liegt in einem übermäßigen partiellen Druckaufbau, der zwar zu einem hohen Energieeintrag mit entsprechender Temperaturerhöhung führt, jedoch eine ungenügende Agglomeratzerteilung bringt.

Feststoffe im *µ*-Bereich, wie z.B. Farbstoffe, die in einer Flüssigkeit Agglomerate bilden müssen, werden durch eine Strömung aufgrund von Druckdifferenzen auseinander gerissen, um sie zu zerteilen. Mit der erfindungsgemäßen Vorrichtung werden im Gegensatz zu den bekannten Schneckenextruder mit Knetblöcken und dergleichen Dehnströmungen erzeugt, die auf diese Agglomerate ohne wesentliche Temperaturerhöhung einwirken. Damit wird erfindungsgemäß der unproduktive Energieanteil erheblich herabgesetzt.

Erfindungsgemäß sind die fördernden ein- und/oder zweigängigen Schneckengänge der Schneckenabschnitte des Schneckenelements relativ kurz ausgeführt. Das heißt, der Schneckenkamm jedes Schneckenabschnitts ist lediglich ein Bruchteil der Gangsteigung. Der axiale Abstand des Schneckenkamms jedes Schneckenabschnitts ist dabei vorzugsweise nicht größer als die Schneckengangtiefe. Die axialen Längen der Schneckenkämme der Schneckenabschnitte jedes Schneckenelements können dabei auch unterschiedlich ausgebildet sein.

Durch die fortschreitend gegeneinander im gleichen Drehsinn winkelversetzten Schneckenabschnitte jedes Schneckenelements werden treppenartig winkelversetzte Stirnflächen gebildet.

Der Winkelversatz der Schneckenabschnittes jedes Schneckenelements wiederholt sich vorzugsweise maximal nach zwei Drittel der Gangsteigung.

Durch die ein- oder zweigängige Ausführung der Schneckenelemente werden verhältnismäßig große, wirksame Stirnflächen erhalten.

| | | Stand der Technik | Erfindungsgemäße Ausführung | | | |
|---|---|---|---|---|---|---|
| Achsabstand | a | 25 mm | 25 | 25 | 25 | 25 |
| Schneckenaußen DM | D | 28,3 mm | 28,3 | 28,3 | 30 | 30 |
| Schneckenkern DM | d | 21,2 mm | 21,2 | 21,2 | 19,5 | 19,5 |
| Gangzahl | | 3 | 2 | 1 | 2 | 1 |
| D:d | | 1,3349 | 1,335 | 1,335 | 1,539 | 1,539 |
| Ineinandergreiffläche (8) | | 32,9 | 32,9 | 32,9 | 60,46 | 60,46 |
| Wirksame Stirnfläche (16) | | 168 | 204 | 240 | 271 | 339 |

Die Rechnung zeigt, dass eine zweigängige Schnecke gegenüber einer dreigängigen gleicher Größe 21 % und die eingängige mehr als 42 % größere wirksame Stirnfläche bei sonst gleichen Maßen hat. Wird bei konstantem Achsabstand der Außendurchmesser von 28,3 auf 30 mm erhöht, erreicht man sogar nahezu eine Verdoppelung der entscheidenden Werte (16) und (8).

Die Wirksamkeit der Stirnflächen hängt außerdem von dem Winkel ab, mit dem die Schneckenabschnitte eines Schneckenelementes gegenüber einander versetzt sind. Dieser Versatzwinkel wird vorzugsweise möglichst groß gewählt, d. h. er beträgt beispielsweise bei eingängigen Schneckenabschnitten etwa 180° und bei zweigängigen Schneckenabschnitten etwa 90°.

Die Stirnflächen werden zusätzlich benetzt und damit als Dispergierflächen gewonnen. Zudem hängt die Wirksamkeit des Homogenisierungs- und Dispergiervorgangs von dem Abstand ab, den die Stirnflächen der Schneckenabschnitte der einen Welle von den benachbarten Stirnflächen der Schneckenelemente der anderen Welle in der Ineinandergreifzone der beiden Schneckenwellen der Schneckenmaschine einnehmen. Mit wachsendem Abstand der Stirnflächen vergrößert sich nämlich der frei radiale Fließquerschnitt, wodurch das Schergefälle in der Ineinandergreifzone kleiner wird. Da die Fließrichtungen in der Ineinandergreifzone vollkommen anders verlaufen als außerhalb der Ineinandergreifzone wird das Produkt durch ein Dehnen und Stauchen in der Ineinandergreifzone mit der erfindungsgemäßen Vorrichtung hoch wirksamen Homogenisierungs- und Dispergierungsvorgängen unterworfen. Entscheidend für das gute Dispergierergebnis, das mit der erfindungsgemäßen Vorrichtung erreicht wird, ist jedoch, dass durch die vielfache Folge von freiem Fließen, axialer Förderung im Schneckengang und in der, Ineinandergreifzone, das ohne Viskositätserniedrigung erfolgen kann, die Bruchflächen des zerteilten Agglomerats benetzt werden, bevor wieder eine Kraft auf das Agglomerat wirksam wird, um es weiter zu zerteilen.

Schneckenelemente, die auf Tragwellen aufgesteckt werden, können zur Kraftübertragung und Positionierung mit nur einem Keil ausgerüstet sein. In diesem Fall kann die axiale Länge eines Schneckenabschnitts eines zweigängigen Schneckenelements ein ganzes Vielfaches der halben Gangsteigung betragen. Das heißt, bei einer Gangsteigung von beispielsweise 30 mm kann die axiale Länge eines Schneckenabschnitts 15 mm oder ein Vielfaches davon sein. Moderne Tragwellen sind zur besseren Kraftübertragung jedoch mit einer Keilverzahnung mit einer Vielzahl von Zähnen, beispielsweise 24 Zähnen, ausgeführt. In diesem Fall kann die axiale Länge eines Schneckenabschnitts eines eingängigen Schneckenelements ein 24stel der Gangsteigung betragen, d. h. bei einer Gangsteigung von z. B. 30 mm kann die axiale Länge eines Schneckenabschnitts 1,25 mm oder ein Vielfaches davon betragen. Das heißt, die axiale Länge eines Schneckenabschnitts ergibt sich vorzugsweise aus der Formel: Gangsteigung dividiert durch das Produkt aus Gangzahl und Zahl der Zähne der Keilverzahnung, oder ein Vielfaches davon.

Es ist ersichtlich, dass mit einer niedrigen Gangzahl und/oder einer hohen Zähnezahl der Keilverzahnung kürzere Schneckenabschnitte gebildet werden können. Vorzugsweise wiederholt sich der Winkelversatz der Schneckenabschnitte jedes Schneckenelements jedoch maximal nach drei Viertel der Gangsteigung.

Das Schneckenelement kann jedoch auch einen oder mehrere Schneckenabschnitte aufweisen, deren axiale Länge der Länge einer Gangsteigung entspricht oder größer ist. Die axiale Länge der Schneckenkämme der Schneckenabschnitte eines Schneckenelements kann also unterschiedlich ausgebildet sein. Vorzugsweise ist die Gangsteigung der Schneckenabschnitte des Schneckenelements gleich oder größer als der Schneckenaußendurchmesser. Der Versatzwinkel zwischen den benachbarten Schneckenabschnitten eines Schneckenelements kann für alle Schneckenabschnitte gleich sein oder es können unterschiedliche Versatzwinkel verwendet werden.

Die erfindungsgemäße Schneckenmaschine fördert Feststoffe drucklos axial um eine Gangsteigung bei einer Umdrehung des Schneckenelements, während viskose Stoffe maximal um eine halbe Gangsteigung bei einer Umdrehung des Schneckenelements gefördert werden. Das Förderverhalten der Schneckenelemente der erfindungsgemäßen Vorrichtung ist also entscheidend von der inneren Reibung der geförderten Stoffe, bei viskosen Stoffen, also von deren Viskosität, abhängig.

Durch den Winkelversatz des nachfolgenden Schneckenabschnitts gegenüber dem vorangegangenen Schneckenabschnitt entsteht im freien Schneckengang eine freie Stirnseite, welche zu einer wesentlichen Änderung der axialen Stoffströmung führt.

Das heißt, der Stoff wird durch diese Stirnflächen zuerst axial gestaut und wieder beschleunigt oder gedehnt, im wesentlichen in die neue radiale Drehrichtung der Schneckenwellen. Dem Zusammenwirken Schnecke/Gehäuse folgt in Umfangsrichtung in der Ineinandergreifzone das Zusammenwirken von der betrachteten Schnecke mit der Gegenschnecke, das im wesentlichen ohne Gehäuseeinfluß stattfindet und durch eine starke Materialbeschleunigung gekennzeichnet ist. Gleichzeitig erfolgt teils ein spitzes Umlenken des Materialstromes und ein Gegeneinander-Vorbeigleiten der freien Stirnflächen der beteiligten Schnecken, was wiederum zu vielfältigen intensiven Dehn- und Schervorgängen führt. Wichtig ist, dass dabei wiederum der gesamte Materialstrom und nicht nur eine partielle Zone beteiligt ist.

Um die Wirksamkeit zu erhöhen und die Vorgänge zu wiederholen, weisen die erfindungsgemäßen Schneckenelemente jeweils mindestens drei Schneckenabschnitte auf.

Ein Winkelversatz von Schneckenabschnitt zu Schneckenabschnitt des Schneckenelements um etwa den halben Gangwinkel wird bevorzugt, da dadurch Stirnflächen mit großer Oberfläche entstehen, also große benetzbare Oberflächen, um die größtmögliche Wirkung zu erreichen.

Gleichmäßige Öffnungsquerschnitte der Schneckenelemente senkrecht zur Drehachse im radialen Schneckenspiel können zudem zu einer gleichmäßigen Stromverteilung auf die einzelnen Gänge bei zweigängigen Schnecken führen.

Zugleich ist das erfindungsgemäße Schneckenelement wie ein herkömmliches Schneckenelement auf die Tragwelle problemlos aufsteckbar.

Um in der Ineinandergreifzone einen möglichst effektiven Energieeintrag durch Dehnen und Scheren zu erreichen, sind die Stirnflächen der Schneckenelemente der einen Welle von den benachbarten Stirnflächen der Schneckenelemente der anderen Welle in der Ineinandergreifzone der beiden Schneckenwellen im Abstand voneinander angeordnet. Dazu sind die Stirnflächen der Schneckenabschnitte vorzugsweise als zur Drehachse koaxiale Kegelflächenabschnitte ausgebildet, wobei die Kegelflächenabschnitte der beiden Stirnflächen eines Schneckenabschnitts auf einem Doppelkegel mit einer gemeinsamen Basis liegen bzw. die einander gegenüberliegenden Stirnflächen benachbarter Schneckenabschnitte auf einem Doppelkegel mit einer gemeinsamen Achse. Der Kegelwinkel, also der Winkel zwischen der Drehachse und der Kegelfläche, in der die Stirnfläche liegt, beträgt vorzugsweise mindestens 50°, insbesondere zwischen 60 und 80°.

Die erfindungsgemäße Vorrichtung weist mindestens zwei ineinander kämmende Schneckenwellen auf, kann jedoch auch mehr ineinander greifende Schneckenwellen besitzen, beispielsweise mehrere in einem Raum in einem Gehäuse längs eines Kreises mit gleichem Zentriwinkelabstand angeordnete Wellen gemäß EP 0788867 B1.

Nachstehend ist die Erfindung anhand der Zeichnung beispielhaft näher erläutert. Darin zeigen:
Figur 1 eine Seitenansicht von zwei miteinander kämmenden Schneckenelementen; und
Figur 2 einen Querschnitt entlang der Linie II-II nach Figur 1 durch die in einem Gehäuse angeordneten Schneckenelemente.

Danach werden zwei achsparallele Tragwellen 1, 2 entsprechend der Pfeile A, A' gleichsinnig von einem (nicht dargestellten) Getriebe angetrieben. Auf jeder Tragwelle 1, 2 sind mehrere Schneckenelemente gesteckt, wobei nur ein Schneckenelement 3, 3' auf jeder Tragwelle 1, 2 dargestellt ist.

Zur drehfesten Verbindung der Schneckenelemente 3, 3' sind die Tragwellen 1, 2 mit einer Keilverzahnung mit einer Vielzahl von Leisten oder Zähnen 4, 4' versehen, die in eine entsprechende Anzahl von Längsnuten 5, 5' in der Bohrung des die Keilnabe bildenden Kerns der Schneckenelemente 3, 3' eingreifen.

In dem Gehäuse 6 sind zwei Bohrungen 7, 7' vorgesehen, die die Wellen 1, 2 mit den Schneckenelementen 3, 3' aufnehmen. Die Bohrungen 7, 7' schneiden sich im Querschnitt, sodass die Schneckenelemente 3, 3' in der Zone 8 kämmend ineinander greifen.

Die Schneckenelemente 3, 3', die einstückig sind, also jeweils nur aus einem Teil bestehen, weisen jeweils Schneckenabschnitte 11, 12, 13, 14 bzw. 11', 12', 13', 14' auf. Die Schneckenabschnitte 11, 12, 13, 14 bzw. 11', 12', 13', 14' jedes Schneckenelements 3, 3' sind um den gleichen Winkel im gleichen Drehsinn fortschreitend zueinander winkelversetzt.

Jeder Schneckenabschnitt 11, 12, ... weist damit eine vordere und eine hintere Stirnfläche 15, 16 bzw. 15', 16' auf. Die Schneckenabschnitte 11, 12, ... sind identisch. Das heißt, sie sind jeweils zweigängig und weisen den gleichen Gangsteigungswinkel sowie die gleiche axiale Länge auf.

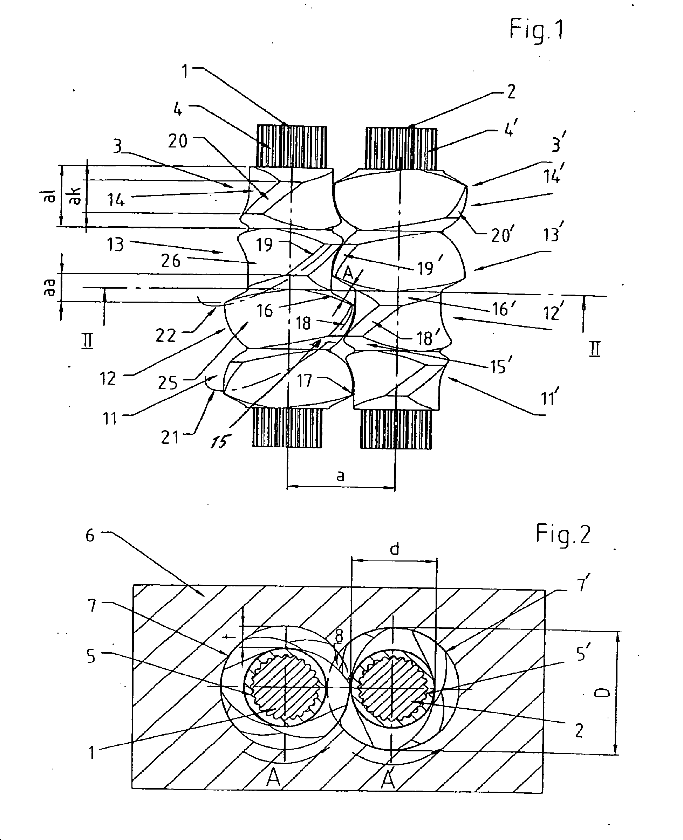

Wie in Figur 1 für das Schneckenelement 3 auf der Welle 1 dargestellt ist, verlaufen sie Schneckenkämme 17, 18, 19, 20 jedes Schneckenelements 3, 3' jedoch nicht entlang einer Schneckenlinie, sondern entlang zueinander parallel verlaufender Schneckenlinien 21, 22, ...

Die axiale Länge al der zweigängigen Schneckenabschnitte 11, 12, ..., also der Winkelversatz der Schneckenabschnitte 11, 12, ... wiederholt sich nach jeweils dem gleichen Bruchteil der Gangsteigung.

Der axiale Abstand ak der Schneckenkämme 21, 22, ... jedes Schneckenabschnitts 11, 12, ... ist nicht größer als die Schneckengangtiefe t.

Die Stirnflächen 15, 16, 15', 16' aller Schneckenabschnitte 11, 12, ... liegen auf zu den Wellen 1, 2 koaxialen Kegeln, wobei die beiden Stirnflächen 15, 16 bzw. 15', 16' eines Schneckenabschnitts 12, 11' auf einem Doppelkegel mit einer gemeinsamen Basis liegen. Der Kegelwinkel ist jeweils gleich und kann beispielsweise 70° betragen.

Die Oberfläche jedes Schneckenabschnitts 11, 12, ... setzt sich damit aus den beiden Stirnflächen 15, 16, ..., den beiden Kämmen 17, 18, ... und den Schneckenflächen 25, 26 zwischen den beiden Kämmen zusammen.

In der Ineinandergreifzone 8 weisen die Stirnflächen 15, 16, ... des Schneckenelements 3 auf der Welle 1 von den benachbarten Stirnflächen des Schneckenelements 3' auf der Welle 2 einen Abstand A auf.

## Patentansprüche

1. Vorrichtung zum Dispergieren und Aufschmelzen fließfähiger Stoffe mit wenigstens zwei achsparallelen, gleichsinnig drehbaren Tragwellen (1, 2), auf die Schneckenelemente (3, 3') gleicher Steigungsrichtung verdrehsicher aufgesteckt sind, mit denen benachbarte Wellen (1, 2) kämmend ineinander greifen, wobei zumindest bei einem Paar ineinander greifender Schneckenelemente (3, 3') jedes Schneckenelement (3, 3') aus Schneckenabschnitten (11, 12, 13, 14 bzw. 11', 12', 13', 14') besteht, die unter Bildung von Stirnflächen (15, 16; 15', 16') mit gleichem Drehsinn fortschreitend zueinander winkelversetzt angeordnet und ein- oder zweigängig ausgebildet sind.

2. Vorrichtung nach Anspruch 1, **dadurch gekennzeichnet, dass** die axiale Länge (al) jedes Schneckenabschnitts (11, 12, ...) ein Bruchteil der Gangsteigung des Schneckenkamms (21, 22, ...; 21', 22', ...) jedes Schneckenabschnitts (11, 12) ist.

3. Vorrichtung nach Anspruch 2, **dadurch gekennzeichnet, dass** die axiale Länge (al) jedes Schneckenabschnitts (11, 12, ...) höchstens zwei Drittel der Gangsteigung ist.

4. Vorrichtung nach einem der vorstehenden Ansprüche, **dadurch gekennzeichnet, dass** die axialen Längen (ak) der Schneckenkämme (21, 22, ...) der Schneckenabschnitte (11, 12, ...) jedes Schneckenelements (3, 3') unterschiedlich sind.

5. Vorrichtung nach einem der vorstehenden Ansprüche, **dadurch gekennzeichnet, dass** die benachbarten Schneckenabschnitte (11, 12, ...) eines Schneckenelements (3, 3') unterschiedliche Versatzwinkel aufweisen.

6. Vorrichtung nach einem der vorstehenden Ansprüche, **dadurch gekennzeichnet, dass** die Gangsteigung der Schneckenabschnitte (11, 12, ...) gleich oder größer als der Schneckendurchmesser (D) ist.

7. Vorrichtung nach einem der vorstehenden Ansprüche, **dadurch gekennzeichnet, dass** die Stirnflächen (15, 16; 15', 16') der Schneckenabschnitte (11, 12, ...) auf zur Drehachse koaxialen Kegeln liegen, wobei die Kegel, auf denen die Stirnflächen (15, 16; 15', 16') eines Schneckenabschnittes (11, 12, ....) liegen, einen Doppelkegel mit gemeinsamer Basis bilden.

8. Vorrichtung nach Anspruch 7, **dadurch gekennzeichnet, dass** der axiale Abstand (ak) des Schneckenkamms (21, 22, ...) jedes Schneckenabschnitts (11, 12, ...) nicht größer ist als die Schneckengangtiefe (t) x tg (90°-Kegelwinkel der Stirnfläche (15, 16, 15', 16')) x 2 ist.

9. Vorrichtung nach Anspruch 7 oder 8, **dadurch gekennzeichnet, dass** der Kegelwinkel mindestens 50° beträgt.

10. Vorrichtung nach einem der vorstehenden Ansprüche, **dadurch gekennzeichnet, dass** das Schneckenelement (3, 3') wenigstens einen Schneckenabschnitt aufweist, dessen axiale Länge dem zweifachen Schneckendurchmesser entspricht.

## Claims

1. An apparatus for dispersing and melting flowable substances having at least two axis-parallel supporting shafts (1, 2) rotatable in the same direction on which screw elements (3, 3') with the same direction of thread are fitted so as to rotate in unison, with which adjacent shafts (1, 2) intermesh, wherein at least for one pair of intermeshing screw elements (3, 3'), each screw element (3, 3') consists of screw portions (11, 12, 13, 14 and 11', 12', 13', 14', respectively) that are disposed at a progressive angular offset from each other with the same sense of rotation so as to form faces (15, 16; 15', 16') and are of single- or double-flighted form.

2. An apparatus according to claim 1, **characterized in that** the axial length (al) of each screw portion (11, 12,...) is a fraction of the pitch of the screw crest (21, 22,...; 21', 22',...) of each screw portion (11, 12).

3. An apparatus according to claim 2, **characterized in that** the axial length (al) of each screw portion (11, 12,...) is at most two thirds of the pitch.

4. An apparatus according to any of the above claims, **characterized in that** the axial lengths (ak) of the screw crests (21, 22,...) of the screw portions (11, 12,...) of each screw element (3, 3') are different.

5. An apparatus according to any of the above claims, **characterized in that** the adjacent screw portions (11, 12,...) of a screw element (3, 3') have different angles of offset.

6. An apparatus according to any of the above claims, **characterized in that** the pitch of the screw portions (11, 12,...) is equal to or greater than the screw diameter (D).

7. An apparatus according to any of the above claims, **characterized in that** the faces (15, 16; 15', 16') of the screw portions (11, 12,...) lie on cones coaxial with the rotation axis, whereby the cones on which the faces (15, 16; 15', 16') of a screw portion (11, 12,....) lie form a double cone with a common base.

8. An apparatus according to claim 7, **characterized in that** the axial distance (ak) of the screw crest (21, 22,...) of each screw portion (11, 12,...) is not greater than the screw flight depth (t) x tg (90° cone angle of face (15, 16, 15', 16')) x 2.

9. An apparatus according to claim 7 or 8, **characterized in that** the cone angle is at least 50°.

10. An apparatus according to any of the above claims, **characterized in that** the screw element (3, 3') has at least one screw portion whose axial length corresponds to twice the screw diameter.

## Revendications

1. Dispositif pour la dispersion et la mise en fusion de matériaux aptes à l'écoulement, comportant au moins deux arbres porteurs (1, 2) tournant dans le même sens et à axes parallèles, sur lesquels des éléments à vis sans fin (3, 3') de même direction de pas sont enfichés de manière antirotative, avec lesquels s'engrènent des arbres (1, 2) voisins, et dans le cas où au moins une paire d'éléments à vis sans fin (3, 3') s'engrenant l'un dans l'autre, chaque élément à vis sans fin (3, 3') est constitué par des tronçons de vis sans fin respectifs (11, 12, 13, 14 et 11', 12', 13', 14') qui sont agencés en décalage angulaire progressif les uns par rapport aux autres dans le même sens de rotation, en formant des faces frontales (15, 16 ; 15', 16'), et qui sont réalisés à un pas ou à deux pas.

2. Dispositif selon la revendication 1, **caractérisé en ce que** la longueur axiale (al) de chaque tronçon de vis sans fin (11, 12, ...) est une fraction du pas de la crête de vis sans fin (21, 22, ... ; 21', 22', ...) de chaque tronçon de vis sans fin (11, 12).

3. Dispositif selon la revendication 2, **caractérisé en ce que** la longueur axiale (al) de chaque tronçon de vis sans fin (11, 12, ...) est au plus un tiers du pas.

4. Dispositif selon l'une des revendications précédentes, **caractérisé en ce que** les longueurs axiales (ak) des crêtes de vis sans fin (21, 22, ...) des tronçons de vis sans fin (11, 12, ...) de chaque élément de vis sans fin (3, 3') sont différentes.

5. Dispositif selon l'une des revendications précédentes, **caractérisé en ce que** les tronçon de vis sans fin (11, 12, ...) voisins d'un élément de vis sans fin (3, 3') présentent des angles de décalage différents.

6. Dispositif selon l'une des revendications précédentes, **caractérisé en ce que** le pas de vis des tronçon de vis sans fin (11, 12, ...) est égal ou supérieur au diamètre de vis sans fin (D).

7. Dispositif selon l'une des revendications précédentes, **caractérisé en ce que** les faces frontales (15, 16 ; 15', 16') des tronçons de vis sans fin (11, 12) sont situées sur des cônes coaxiaux par rapport à l'axe de rotation, les cônes sur lesquels sont situées les faces frontales (15, 16 ; 15', 16') d'un tronçon de vis sans fin (11, 12, ...) forment un double cône avec base commune.

8. Dispositif selon la revendication 7, **caractérisé en ce que** la distance axiale (ak) de la crête de vis sans fin (21, 22, ...) de chaque tronçon de vis sans fin (11, 12, ...) n'est pas supérieure à la profondeur de pas de vis sans fin (t) x tg (angle conique de 90° de la face frontale (15, 16, 15', 16')) x 2.

9. Dispositif selon la revendication 7 ou 8, **caractérisé en ce que** l'angle conique est d'au moins 50°.

10. Dispositif selon l'une des revendications précédentes, **caractérisé en ce que** l'élément de vis sans fin (3, 3') présente au moins un tronçon de vis sans fin dont la longueur axiale correspond au double du diamètre de vis sans fin.
